# EUROPEAN PATENT APPLICATION

(11) **EP 4 582 892 A1**
(43) Date of publication of application: **09.07.2025**
(21) Application number: 23905317.6
(22) Date of filing: 04.09.2023
(51) Int. Cl.: G05D 1/00

(54) **TARGET FOLLOWING METHOD AND APPARATUS, ROBOT, AND READABLE STORAGE MEDIUM**

(30) Priority: 23.12.2022 CN 202211662225
(71) Applicant: Midea Group (Shanghai) Co., Ltd., Shanghai 201702 (CN); Midea Group Co., Ltd., Foshan, Guangdong 528311 (CN)
(72) Inventor: LIU, Sanjun, Shanghai 201702 (CN); OU, Zhicai, Shanghai 201702 (CN); MEI, Jiangyuan, Shanghai 201702 (CN); XIA, Yinli, Shanghai 201702 (CN)
(74) Representative: Ran, Handong
(86) International application number: PCT/CN2023/116664
(87) International publication number: WO 2024/131139

(57) **Abstract**

The present application provides a target following method and apparatus, a robot, and a readable storage medium. The target following method comprises: determining a target object to be followed, and storing a target object feature corresponding to said target object; in response to an object feature of a recognized object matching the pre-stored target object feature, following the recognized object; and in response to an object feature of a recognized object not matching the pre-stored target object feature, continuing to perform object feature recognition on objects within a field-of-view range, and when an object feature matching the pre-stored target object feature is recognized again, following the re-recognized object.

## Description

### CROSS-REFERENCES TO RELATED APPLICATIONS

This application claims priority to Chinese Patent Application No. 202211662225.4, filed to the China National Intellectual Property Administration on December 23, 2022, and entitled "target tracking method and target tracking apparatus, robot and readable storage medium", which is herein incorporated by reference in its entirely.

### TECHNICAL FIELD

The present application relates to the field of robot technologies, and in particularly to a target tracking method, a target tracking apparatus, a robot and a readable storage medium.

### BACKGROUND

At present, with the development of robot technologies, the applications of service robots have become increasingly widespread, and the functions of the service robots have gradually diversified. For example, an increasing number of robots are equipped with a human face tracking function. However, currently available robots with the human face tracking function have high false recognition rates while tracking the human face for recognition, resulting in a poor tracking performance for the target.

### SUMMARY

The present application aims to solve at least one of the technical problems present in the existing technologies or in the related technologies.

To this end, according to a first aspect of the present application, a target tracking method is provided.

According to a second aspect of the present application, a target tracking apparatus is provided.

According to a third aspect of the present application, another target tracking apparatus is provided.

According to a fourth aspect of the present application, a robot is provided.

According to a fifth aspect of the present application, a readable storage medium is provided.

According to a sixth aspect of the present application, a computer program product is provided.

In view of this, according to the first aspect of the present application, the target tracking method is proposed. The method includes: determining a target object to be tracked, and storing a target object feature of a target object; in response to an object feature of a recognized object matching the target object feature that is pre-stored, tracking the recognized object; in response to the object feature of the recognized object not matching the target object feature that is pre-stored, proceeding with object feature recognition of an object within a field of view; in a case where the object feature matching the target object feature that is pre-stored is recognized once again, tracking the re-recognized object.

The execution subject of the technical schemes of the target tracking method provided in the present application may be an intelligent robot, the target tracking apparatus, or may be determined according to actual usage requirements, which are not specifically restricted here. To more clearly describe the target tracking method provided in the present application, the following description will be provided with the intelligent robot being the execution subject of the target tracking method.

The target tracking method provided in the present application is used to control operation of the intelligent robot, thereby enabling the intelligent robot to complete a corresponding tracking and recognition task. The tracking and recognition task may for example be a video call conducted by the intelligent robot. In practical application processes, the above-mentioned intelligent robot may specifically be a mobile device equipped with a recognition function. The mobile device may for example be a robot cleaner, a lobby robot, a companion robot for children, an airport intelligent robot, an intelligent question-and-answer robot, a home service robot, or the like, which are not specifically restricted herein.

Specifically, in the target tracking method provided in the present application, the above-mentioned intelligent robot is equipped with a target recognition function and a target tracking function. After the target tracking function of the intelligent robot is activated, the intelligent robot may analyze and recognize the various objects that appear within the field of view of the intelligent robot, determine the target object to be tracked, and store the target object feature of this target object into a buffer zone. On this basis, the intelligent robot performs tracking and recognition of the target objects in the target scenario. Specifically, the intelligent robot performs analysis and recognition of the various objects in the target scenario, to extract the object features of the various objects in the target scenario. The intelligent robot matches and compares the extracted object feature of each object with the target object feature that is pre-stored in the buffer zone. On this basis, in a case where the object feature of a certain object extracted by the intelligent robot is inconsistent with the target object feature stored in the buffer zone, i.e. the matching fails or is unsuccessful, it is indicated that, the object currently recognized by the intelligent robot is not the target object to be tracked. At this point, the intelligent robot will proceed with analysis and recognition of the extracted object features of the various objects, until an object feature of a certain object extracted by the intelligent robot is consistent with the target object feature stored in the buffer zone, i.e., the match is successful, it is indicated that, the object currently recognized by the intelligent robot is right the above-mentioned target object. At this point, the intelligent robot will track this recognized object in the target scenario, ensuring that this object always remains within its field of view.

Furthermore, during the process of tracking the target object by the intelligent robot, the intelligent robot always performs recognition and analysis of the object features of the various objects within its field of view. On this basis, in a case where none of the recognized object features of the various objects is consistent with the target object feature stored in the buffer zone, it is indicated that, the intelligent robot has lost track of the target object. For example, in a case where the target object is obscured by another object or where the target object moves out of the target scenario, the intelligent robot is unable to recognize the target object within its field of view. At this point, the intelligent robot will proceed with object feature recognition of the various objects that appear within its field of view based on the above-mentioned target object feature. In a case where the intelligent robot recognizes the object feature matching the above-mentioned target object feature once again, it is indicated that, the intelligent robot has successfully reacquired or re-found the previously lost tracking target (i.e., the target object). The intelligent robot will track the re-found target object once again, to perform or resume an operation, such as the video call.

In this way, by tracking the target object based on the target object feature of the target object to be tracked, interferences from other objects during a tracking process may be avoided, thereby enabling an interference-resistance tracking function of the intelligent robot, and reducing a false recognition rate during the tracking process. Further, in a case where an object being followed is lost, by the approach of matching the recognized object feature with the cached target object feature, the target object to be tracked is refund for recognition. In this way, a precise re-finding function of the target tracking object is realized, thereby meeting the usage requirements of the user.

The above-mentioned target tracking method according to the present application may further include the following additional technical features.

In some technical schemes of the present application, the determining the target object to be tracked includes: obtaining a first object feature of at least one recognition object in a recognition interface; determining the target object in the recognition interface according to the first object feature. The first object feature includes at least one selected from the group consisting of: a location feature, an attribute feature.

In the above technical schemes, the above-mentioned intelligent robot is equipped with the target recognition function. During the recognition process performed by the above-mentioned intelligent robot, the intelligent robot may perform recognition and analysis of the various recognition objects that enter the field of recognition view of the intelligent robot, so as to obtain the first object feature of the various recognition objects within the field of recognition view, such as to obtain the location features or the attribute features of the various recognition objects. The attribute feature may further include a facial attribute feature, a voice attribute feature, an age attribute feature, a gender attribute feature, or the like. On this basis, the intelligent robot may further determine, based on the first object features of the various recognized recognition objects, the target object to be tracked from at least one recognition object in the recognition interface. For example, the intelligent robot may determine a recognition object located in the center position of the recognition interface as the target object to be tracked. In some embodiments, the intelligent robot may determine the recognition object in the recognition interface that matches the child attribute feature as the target object to be tracked. In this way, the intelligent robot may determine the target object to be tracked according to the first object features of the various recognition objects that has been recognized by the intelligent robot, so as to guarantee the accuracy of the target object identification process. This further guarantees the accuracy of the process in which the intelligent robot tracks the target object and performs recognition, thereby meeting the usage requirements of the user.

In some technical schemes of the present application, the determining the target object in the recognition interface according to the first object feature includes: determining, according to the first object feature, an object location of each recognition object; in response to the object location of a first recognition object of the at least one recognition object meeting a first condition, determining the first recognition object as the target object.

In the above technical schemes, after the intelligent robot performs recognition and analysis of the various recognition objects within its field of recognition view to obtain the first object features of the various recognition objects within its field of recognition view, the intelligent robot determines the object locations of the various recognition objects in its recognition interface according to the first object features of the various recognition objects. On this basis, the intelligent robot performs analysis and processing of the determined object locations of the various recognition objects. In a case where the intelligent robot judges that the object location of the first recognition object in its recognition interface matches the set first condition, the intelligent robot will determine this first recognition object as the target object to be tracked. The above-mentioned first recognition object may be any recognition object in the recognition interface of the intelligent robot. For example, the intelligent robot may determine the recognition object located in the center position of the recognition interface as the target object to be tracked. In this way, the intelligent robot determines, according to the object locations of the various recognition objects in its recognition interface, the target object within its field of recognition view, thereby guaranteeing the accuracy of the target object determination by the intelligent robot. This further guarantees the accuracy of the process in which the intelligent robot tracks the target object and performs recognition, thereby meeting the usage requirements of the user.

In some technical schemes of the present application, the determining the target object in the recognition interface according to the first object feature includes: determining, according to the first object feature, an object attribute of each recognition object; performing matching between the object attribute of each recognition object and the target object attribute, wherein the target object attribute matches or corresponds to the target object; in response to the matching between the object attribute of a second recognition object of the at least one recognition object and the target object attribute being successful, determining the second recognition object as the target object; wherein the object attribute includes at least one selected from the group consisting of: a facial attribute, a voice attribute, a gender attribute, and an age attribute.

In the above technical schemes, after the intelligent robot performs recognition and analysis of the various recognition objects within the field of recognition view of the intelligent robot to obtain the first object features of the various recognition objects within the field of recognition view of the intelligent robot, the intelligent robot determines the object attributes of the various recognition objects according to the first object features of the various recognition objects. The object attribute is for example the facial attribute, the gender attribute, the voice attribute, the age attribute, or the like. On this basis, the intelligent robot performs comparation and matching between the determined object attributes of the various recognition objects and the set target object attribute. In a case where the intelligent robot judges that the object attribute of the second recognition object in its recognition interface is consistent with the above-mentioned target object attribute, the intelligent robot considers that, the matching between the above-mentioned target object attribute and the object attribute of the first recognition object is successful, and determines the above-mentioned second recognition object as the above-mentioned target object. The above-mentioned second recognition object may be any recognition object in the recognition interface of the intelligent robot. For example, the intelligent robot may determine the recognition object in the recognition interface that matches the child attribute feature as the target object to be tracked. In this way, the intelligent robot determines, according to the object attributes of the various recognition objects in its recognition interface, the target object within the field of recognition view, thereby guaranteeing the accuracy of the target object determination by the intelligent robot. This further guarantees the accuracy of the process in which the intelligent robot tracks the target object and performs the recognition, thereby meeting the usage requirements of the user.

In some technical schemes of the present application, the storing the target object feature for the target object includes: in response to the matching between the target object feature and the cached object features in the buffer zone being unsuccessful, storing the target object feature into the buffer zone; or, in response to the matching between the target object feature and a first cached object feature in the buffer zone being successful, and an acquisition quality of the target object feature is better than that of the first cached object feature, updating the first cached object feature to the target object feature.

In the above technical schemes, after the intelligent robot determines the above-mentioned target object, the intelligent robot will further perform extraction and caching of the target object feature of this target object. Specifically, after extracting the target object feature of the target object, the intelligent robot will perform comparation and matching between this target object feature and the cached object feature in the buffer zone. In a case where the matching between each object feature cached in the buffer zone and the above-mentioned target object feature is unsuccessful, it is indicated that, the above-mentioned target object feature is not present in the buffer zone. At this point, the intelligent robot will cache the extracted target object feature into the buffer zone. In a case where the matching between the first cached object feature in the buffer zone and the above-mentioned target object feature is successful, it is indicated that, the target object feature of the target object has been cached in the buffer zone. At this point, the intelligent robot will perform comparation between the acquisition quality of the cached target object feature (i.e., the above-mentioned first cached object feature) and the acquisition quality of the newly extracted target object feature. The comparation may for example be image quality comparison, voice clarity comparison, or the like. In a case where the acquisition quality of the newly extracted target object feature is better than that of the cached first cached object feature, the intelligent robot will replace the cached first cached object feature with the newly extracted target object feature, thereby updating the object feature cached in the buffer zone.

In this way, by caching the extracted target object feature of the target object or by updating the cached object feature in the buffer zone based on the extracted target object feature of the target object, subsequent interference-resistant tracking and precise re-founding of the target object based on the cached target object feature are facilitated. In this way, the accuracy of the target tracking process performed by the intelligent robot is improved, thereby meeting the requirements of the user.

In some technical schemes of the present application, the in response to the object feature of the recognized object matching the target object feature that is pre-stored, tracking the recognized object includes: performing object recognition in the target scenario based on the target object feature; in response to the target object being recognized in the target scenario, determining a target location of the target object in the target scenario; tracking, based on the target location, the target object in the target scenario.

In the above technical schemes, after the intelligent robot determines the target object to be tracked and caches the target object feature of this target object, the intelligent robot performs object recognition and tracking in the target scenario based on the target object feature. Specifically, the intelligent robot performs analysis and recognition of the various objects in the target scenario, to extract the object features of the various objects in the target scenario, and matches and compares the extracted object feature of each object with the target object feature that is stored in the buffer zone. In a case where the object feature of a certain object that is extracted by the intelligent robot is consistent with the target object feature stored in the buffer zone, i.e., the matching is successful, it is indicated that, the object currently recognized by the intelligent robot is right the above-mentioned target object. At this point, the intelligent robot may determine the target location of the target object in the target scenario through the object feature of the recognized target object. The intelligent robot further performs tracking of the recognized target object in the target scenario based on the target location, so as to enable the target object to always resume within the field of view. In this way, through tracking, by the intelligent robot, the target object based on the target object feature of the target object to be tracked, interferences from other objects during the tracking process may be avoided, thereby enabling the interference-resistance tracking function of the intelligent robot, and reducing the false recognition rate during the tracking process, thereby guaranteeing the accuracy of the tracking of the target object.

In some technical schemes of the present application, after the in response to the target object being recognized in the target scenario, the target tracking method further includes: in response to the target object moving out of the target scenario, proceeding with object recognition in the target scenario based on the target object feature; in response to the target object being recognized once again in the target scenario, proceeding with tracking the target object in the target scenario.

In the above technical schemes, during the process of tracking the target object by the intelligent robot, the intelligent robot always performs recognition and analysis of the object features of the various objects within its field of view. On this basis, in a case where the intelligent robot loses the track of the target object, such as in a case where the intelligent robot recognizes that the target object has moved out of the target scenario, or where the target object is obscured by another object, the intelligent robot will be unable to recognize the target object within its field of view. In other words, none of the object features of the various objects recognized by the intelligent robot is consistent with the target object feature stored in the buffer zone. At this point, the intelligent robot will proceed with object feature recognition of the various objects appearing within its field of view of the target scenario based on the above-mentioned target object feature. In a case where the intelligent robot recognizes the object feature matching the above-mentioned target object feature in the target scenario once again, that is, in the case where the intelligent robot recognizes the above-mentioned target object in the target scenario once again, the intelligent robot judges that the lost tracking target (i.e., the target object), has been successfully re-found. The intelligent robot then proceeds with tracking the re-found target object in the target scenario. In this way, in a case where the object being followed is lost, the intelligent robot re-finds, by an approach of matching the recognized object feature with the cached target object feature, the target object to be tracked for tracking and recognition. In this way, a precise re-finding function of the target tracking object is realized, thereby meeting the usage requirements of the user.

In some technical schemes of the present application, the tracking the target object in the target scenario includes: in response to a target facial feature of the target object being recognized, determining face location information of the target facial feature in the recognition interface; adjusting a recognition angle according to the face location information, to enable the target facial feature to be located in the target region of the recognition interface.

In the above technical schemes, during the process of tracking the above-mentioned target object in the target scenario by the intelligent robot, the intelligent robot performs target recognition on its recognition interface. In a case where the intelligent robot recognizes the target facial feature of the above-mentioned target object within its recognition interface, the intelligent robot determines the location information of the recognized target facial feature, that is, the face location information of the above-mentioned target facial feature in the recognition interface of the intelligent robot is determined. On this basis, the intelligent robot adjusts the recognition angle according to the location-changing situation of the above-mentioned target facial feature in the recognition interface, that is, according to the changing situation of the above-mentioned face location information, to ensure that the above-mentioned target facial feature always remain within the field of recognition view. In this way, when the target facial feature of the above-mentioned target object presents within the field of recognition view of the intelligent robot, the intelligent robot follows this target facial feature and performs recognition by adjusting the recognition angle of the intelligent robot, allowing the user to obtain a dynamic state of this target object, thereby meeting the usage requirements of the user.

In some technical schemes of the present application, the target tracking method further includes: in a case of tracking the target object, in response to the object attribute of the recognized first object meeting a target condition, tracking a first object in the target scenario.

In the above technical schemes, in the case of tracking the target object by the intelligent robot, the intelligent robot always performs target recognition of the various recognition objects within its recognition interface, so as to determine the object attributes of the various recognition objects. The intelligent robot checks, according to the object attributes of the various recognition objects, whether the recognition object that is particularly concerned with by the user exists in the recognition interface. Specifically, in a case where the object attribute of the first object recognized by the intelligent robot meets the target condition, the intelligent robot may determine the first object as the recognition object that is particularly concerned with by the user. In addition, the tracking object of the intelligent robot is switched from the above-mentioned target object to the first object. In other words, the intelligent robot tracks this first object in the target scenario. While in a case where the object attribute of each recognition object recognized by the intelligent robot does not meet the target condition, the intelligent robot judges that, the recognition object that is particularly concerned with by the user does not exist in the recognition interface. The intelligent robot will proceed with tracking the above-mentioned target object. In other words, in the method provided in the present application, in a case where a recognition task (such as the video call) is performed by the above-mentioned intelligent robot, the intelligent robot may prioritize tracking the first object whose object attribute meets the target condition. In a case where the above-mentioned first object does not exist within the field of recognition view of the intelligent robot, the intelligent robot will then track the target object within its field of recognition view. In this way, in a case where the recognition task (such as the video call) is performed by the above-mentioned intelligent robot, the intelligent robot may prioritize tracking the object that is particularly concerned with by the user or the object of interest, and perform recognition, thereby facilitating the user to preferentially obtain the dynamic state of the object that is particularly concerned with by him/her or the object of interest, and meeting the usage requirements of the user.

The above-mentioned object attribute may include, but is not limited to the following attributes: a location attribute, the facial attribute, the voice attribute, the gender attribute, the age attribute, or the like. The above-mentioned target condition may specifically be: the object attribute of the first object matches a target attribute. The above-mentioned target attribute may specifically refer to the object attribute of a certain particular object (such as a certain family member) set by the user. The above-mentioned target attribute may specifically further refer to a specific object attribute set by the user, such as "a child attribute", "an elderly person attribute", or the like. For example, in a case where the first object whose object attribute meets "the elderly person attribute" is recognized by the intelligent robot within its recognition interface, the intelligent device switches to track this first object.

In some technical schemes of the present application, in response to the object attribute of the recognized first object meeting the target condition, tracking the first object in the target scenario includes: in a case where the number of the first objects whose object attributes meet the target condition is greater than 1, determining object information of each first object according to the object feature of each first object; tracking the first object whose object information meets a second condition. The object information includes at least one selected from the group consisting of: the location information, the attribute information and the facial area information.

In the above technical schemes, in a case where the intelligent robot judges that there are at least 2 first objects in its recognition interface whose object attributes match with the above-mentioned target condition based on the matching result of the object attributes of the various recognition objects in the recognition interface of the intelligent robot with the above-mentioned target condition, the intelligent robot proceeds with determining, according to the object feature of each first object, the object information of the various first objects. The object information is for example the location information, the facial area information, the attribute information, or the like. The intelligent robot further selects one first object, according to the object information of the various first objects and from the determined at least 2 first objects, as the tracking object to perform tracking and recognition. Specifically, the intelligent robot performs analysis and processing of the determined object information of the various first objects. In a case where the intelligent robot judges that, the object information of a certain first object matches the set second condition, the intelligent robot determines this first object as a prioritized recognition object for tracking.

In other words, in a case where the intelligent robot determines, according to the object attributes of the various recognition objects in its recognition interface, at least two recognition objects meet a condition for prioritized tracking, the intelligent robot proceeds with analysis of the object information of the at least two determined recognition objects, so as to select one optimal prioritized tracking object and perform tracking. For example, in a case where the intelligent robot recognizes that two recognition objects whose object attributes meet the "child attribute" present in the recognition interface of the intelligent robot, the intelligent robot tracks a younger one of these two recognition objects. In this way, the accuracy of the determination of the prioritized tracking object (i.e., the object that is particularly concerned with by the user) by the intelligent robot may be ensured, thereby meeting the usage requirements of the user.

In some technical schemes of the present application, after the tracking the first object in the target scenario, the target tracking method further includes: in response to the first object moving out of the target scenario, performing, based on the object feature of the first object, object recognition in the target scenario; in response to the first object being recognized once again in the target scenario, proceeding with tracking the first object in the target scenario; or, in response to the first object moving out of the target scenario, tracking the target object in the target scenario.

In the above technical schemes, during the process of tracking the first object by the intelligent robot, the intelligent robot may further cache the object feature of the first object. On this basis, during a process of the intelligent robot tracking the above-mentioned first object and performing recognition in the target scenario, in a case where the intelligent robot loses track of the first object, for example, in a case where the intelligent robot detects that the first object exits the target scenario, or in a case where the first object is obscured by another object, the intelligent robot proceeds with object feature recognition of the various objects appearing within the field of view of the intelligent robot in the target scenario based on the cached object feature of the first object. In a case where the intelligent robot recognizes the object feature matching the cached object feature of the first object in the target scenario once again, that is, in the case where the intelligent robot recognizes the above-mentioned first object in the target scenario once again, the intelligent robot judges that the lost tracking target (i.e., the first object), has been successfully re-found. The intelligent robot proceeds with tracking the re-found first object in the target scenario. In this way, in a case where the intelligent robot has lost track of the first object, the intelligent robot may re-find the first object based on the cached object feature of the first object. Since the object features of other recognition objects in the recognition object cannot match the cached object feature of the first object, the intelligent robot will not match other recognition objects within the field of recognition view for tracking. In this way, the interference-resistance tracking function and the precise re-finding function of the first object of the intelligent robot are realized, thereby meeting the usage requirements of the user.

In some embodiments, during a process of the intelligent robot tracking the above-mentioned first object and performing recognition in the target scenario, in a case where the intelligent robot loses track of the first object, the intelligent robot switches to track the above-mentioned target object. In some embodiments, the intelligent robot determines, based on the object attributes of the various recognition objects in its recognition interface, a new prioritized tracking object (i.e., a second object) for tracking. At the same time, during the process of tracking the target object or the second object by the intelligent robot, the intelligent robot may perform, based on the cached object feature of the first object, recognition of the various recognition objects in the recognition interface of the intelligent robot. In a case where the above-mentioned first object is recognized once again, the intelligent robot may resume prioritizing the tracking of this first object. In this way, in a case where the object that is particularly concerned with by the user (i.e., the first object) is recognized, the intelligent robot will prioritize tracking this first object. While in a case where the intelligent robot loses track of the first object, the intelligent robot may switch to track the above-mentioned target object or other objects that are concerned with by the user. In this way, the user is facilitated to preferentially obtain the dynamic state of the object that is particularly concerned with by him/her or the object of interest, and the usage requirements of the user are met.

In some technical schemes of the present application, the target tracking method further includes: determining an identity information of the target object according to the target object feature; and performing an interaction task associated with the identity information of the target object.

In the above technical schemes, during a process of the intelligent robot tracking the above-mentioned target object and performing recognition in the target scenario, the intelligent robot may further determine, according to the target object feature of this target object, the identity information of this target object. On this basis, the intelligent robot may search, according to the determined identity information of the target object, that whether any interaction task associated with this identity information exists in the storage zone of the intelligent robot. In a case where the associated interaction task exists in the storage zone, the intelligent robot performs the above-mentioned interaction task on the target object. In this way, during the tracking and recognition process performed by the above-mentioned intelligent robot, a corresponding interaction task may be performed for the tracking object according to the identity information of the tracking object, thereby enriching the interaction capabilities of the intelligent robot, and meeting the usage requirements of the user.

According to the second aspect of the present application, the target tracking apparatus is proposed. The target tracking apparatus includes a processing unit and a recognition unit. The processing unit is configured to: determine the target object to be tracked, and store the target object feature of the target object. The recognition unit is configured to: in response to the object feature of the recognized object matching the target object feature that is pre-stored, track the recognized object. The recognition unit is further configured to: in response to the object feature of the recognized object not matching the target object feature that is pre-stored, proceeding with object feature recognition of the object within the field of view; in a case where the object feature matching the target object feature that is pre-stored is recognized once again, tracking the object that is recognized once again.

The target tracking apparatus provided in the present application is used to control the operation of the intelligent robot, thereby enabling the intelligent robot to perform a corresponding tracking and recognition task. The tracking and recognition task may for example be the video call conducted by the intelligent robot. In practical application processes, the above-mentioned intelligent robot may specifically be a mobile device equipped with the recognition function, for example, the robot cleaner, the lobby robot, the companion robot for children, the airport intelligent robot, the intelligent question-and-answer robot, the home service robot, or the like, which is not specifically restricted herein.

Specifically, the above-mentioned intelligent robot is equipped with the target recognition function and the target tracking function. The target tracking apparatus provided in the present application includes the processing unit and the recognition unit. After the target tracking function of the intelligent robot is activated, the processing unit may analyze and recognize the various objects that appear within the field of view of the intelligent robot, determine the target object to be tracked by the intelligent robot, and store the target object feature of this target object into the buffer zone. On this basis, the target tracking apparatus performs tracking and recognition of the target object in the target scenario through the recognition unit. Specifically, the recognition unit performs analysis and recognition of the various objects in the target scenario, so as to extract the object features of the various objects in the target scenario. The recognition unit matches and compares the extracted object feature of each object with the target object feature that is pre-stored in the buffer zone. On this basis, in a case where the extracted object feature of a certain object is inconsistent with the target object feature stored in the buffer zone, i.e. the matching is unsuccessful, it is indicated that, the object recognized by the recognition unit is not the target object to be tracked. At this point, the recognition unit will proceed with analysis and recognition of the extracted object features of the various objects, until an extracted object feature of a certain object is consistent with the target object feature stored in the buffer zone i.e., the matching is successful. The recognition unit judges that, the currently recognized object is right the above-mentioned target object. At this point, the target tracking apparatus tracks this recognized object in the target scenario, ensuring that this object always remains within the field of view of the intelligent robot.

Furthermore, during the process of tracking the target object by the intelligent robot, the recognition unit always performs recognition and analysis of the object features of the various objects within the field of view of the intelligent robot. On this basis, in a case where none of the object features of the various objects recognized by the recognition unit is consistent with the target object feature stored in the buffer zone, it is indicated that, the intelligent robot has lost track of the target object. For example, in a case where the target object is obscured by another object or where the target object moves out of the target scenario, the recognition unit is unable to recognize the target object within the field of view of the intelligent robot. At this point, the recognition unit will proceed with object feature recognition of the various objects that appear within the field of view of the intelligent robot based on the above-mentioned target object feature. In a case where the recognition unit recognizes the object feature matching the above-mentioned target object feature once again, it is indicated that, the intelligent robot has successfully re-found the previously lost tracking target (i.e., the target object). The intelligent robot will track the re-found target object once again to perform or resume an operation, such as the video call.

In this way, by tracking the target object based on the target object feature of the target object to be tracked, interferences from other objects during the tracking process may be avoided, thereby enabling the interference-resistance tracking function of the intelligent robot, and reducing the false recognition rate during the tracking process. Further, in a case where the object being followed is lost, by an approach of matching the recognized object feature with the cached target object feature, the target object to be tracked is re-found for recognition. In this way, a precise re-finding function of the target tracking object is realized, thereby meeting the usage requirements of the user.

According to the third aspect of the present application, another target tracking apparatus is proposed. The target tracking apparatus includes a memory and a processor. The memory stores a program or an instruction. The processor, when executing the program or the instruction, implements the operations of the target tracking method in any of the above-mentioned technical schemes. Therefore, the target tracking apparatus provided according to the third aspect of the present application has all the beneficial effects of the target tracking method of any technical scheme according to the above-mentioned first aspect, which will not be elaborated herein. According to the fourth aspect of the present application, the robot is provided. The robot includes a chassis, a main body, and the target tracking apparatus of the technical scheme according to the above-mentioned third aspect. The chassis is provided with a motion apparatus. The main body is provided on the chassis. The main body is provided with a camera apparatus. The target tracking apparatus may control the camera apparatus to perform recognition. The target tracking apparatus may control the motion apparatus to move or rotate, so as to adjust the recognition angle.

The robot provided according to the fourth aspect of the present application may include the target tracking apparatus of the technical scheme of the above-mentioned third aspect. Therefore, the robot provided according to the fourth aspect of the present application has all the beneficial effects of the target tracking apparatus of the technical scheme of the above-mentioned third aspect, which will not be elaborated herein.

Further, the above-mentioned robot further includes the chassis and the main body. The chassis is provided with the motion apparatus. The motion apparatus may drive the chassis and the main body portion to move or rotate together. The main body is provided with the camera apparatus. During the operation process of the robot, the target tracking apparatus may control the camera apparatus to perform recognition, and control the motion apparatus to move or rotate according to the picture recognized by the camera apparatus. In this way, the recognition angle of the camera apparatus may be adjusted according to the location-changing situation of the tracking object, thereby achieving the tracking and recognition function of the robot.

The above-mentioned robot according to the present application may further include the following additional technical features.

In some technical schemes of the present application, the main body includes a first main body and a second main body. The first main body is provided on the chassis. The second main body is provided on the first main body, and is rotatably connected to the first main body. The camera apparatus is provided on the second main body. The second main body is capable of swinging along an axis direction of the robot. The second main body is rotatable around an axis of the robot.

In the above technical schemes, the main body portion of the robot includes the first main body and the second main body. The second main body may specifically be the head of the robot. The second main body is provided with the camera apparatus. The second main body may perform rotational movement or pitching movement independently relative to the first main body. In other words, the second main body may specifically swing along the axial direction of the robot. The second main body may specifically rotate around the axis of the robot.

On this basis, during the process in which the robot adjusts the recognition angle of the camera apparatus according to the location-changing situation the tracking object, the robot may specifically drive the entire robot to rotate solely through the motion apparatus on the chassis, thereby adjusting the recognition angle of the camera apparatus on the robot. The robot may specifically further only drive the camera apparatus to perform the rotational movement or the pitching movement through the second main body (such as the head of the robot), thereby adjusting the recognition angle of the camera apparatus. The robot may further adjust the recognition angle of the camera apparatus on the robot through the coordinated rotation of the second main body on the robot and the motion apparatus on the chassis. During the actual application process, those of ordinary skills in the art may set the specific approach by which the robot adjusts the recognition angle of the camera apparatus on the robot according to actual situations, which is not specifically restricted herein.

In some technical schemes of the present application, the robot further includes a display apparatus. The display apparatus is configured to display a recognition picture of the camera apparatus.

In the above technical schemes, the above-mentioned robot may further include the display apparatus, such as a display screen. During a process in which the robot recognizes the picture through its camera apparatus, this display apparatus may display the picture recognized by the camera apparatus, thereby allowing the user to look up the recognition picture of the robot, and to conduct operations such as a video chat, a video conference, or the like.

The readable storage medium is provided according to the fifth aspect of the present application. The readable storage medium stores the program or the instruction. The program or the instruction, when being executed by a processor, may implement the target tracking method of any of the above-mentioned technical schemes. Therefore, the readable storage medium provided according to the fifth aspect of the present application has all the beneficial effects of the target tracking method of any technical scheme according to the above-mentioned first aspect, which will not be elaborated herein.

The computer program product is provided according to the sixth aspect of the present application. The computer program product includes a computer program. This computer program, when being executed by a processor, may implement the target tracking method of any of the above-mentioned technical schemes. Therefore, the computer program product provided according to the sixth aspect of the present application has all the beneficial effects of the target tracking method of any technical scheme according to the above-mentioned first aspect, which will not be elaborated herein.

Additional aspects and advantages of the present application will become apparent in the following detailed description, or will be learned through the practice of the present application.

### BRIEF DESCRIPTION OF THE DRAWINGS

The above-mentioned and/or additional aspects and advantages of the present application will become apparent and more easily understood from the description of the embodiments in conjunction with the accompanying drawings.
Fig. 1 is a schematic flowchart of a first embodiment of a target tracking method according to the present application.
Fig. 2 is a schematic flowchart of a second embodiment of the target tracking method according to the present application.
Fig. 3 is a schematic flowchart of a third embodiment of the target tracking method according to the present application.
Fig. 4 is a schematic flowchart of a fourth embodiment of the target tracking method according to the present application.
Fig. 5 is a schematic flowchart of a fifth embodiment of the target tracking method according to the present application.
Fig. 6 is a structural block diagram of a first embodiment of a target tracking apparatus according to the present application.
Fig. 7 is a structural block diagram of a second embodiment of the target tracking apparatus according to the present application.
Fig. 8 is a structural block diagram of an embodiment of a robot according to the present application.
Fig. 9 is a workflow framework diagram of an embodiment of a robot according to the present application.

### DETAILED DESCRIPTION

To provide a clearer understanding of the above-mentioned purposes, features and advantages of the present application, a more detailed description of the present application is provided below in conjunction with the accompanying drawings and embodiments. The embodiments of the present application and the features in the embodiments may be combined with each other as long as there is no confliction.

Many specific details are set forth in the following description in order to facilitate a full understanding of the present application. However, the present application may also be implemented in other ways different from those described herein. Therefore, the protection scope of the present application is not limited to the restrictions of specific embodiments that are disclosed below.

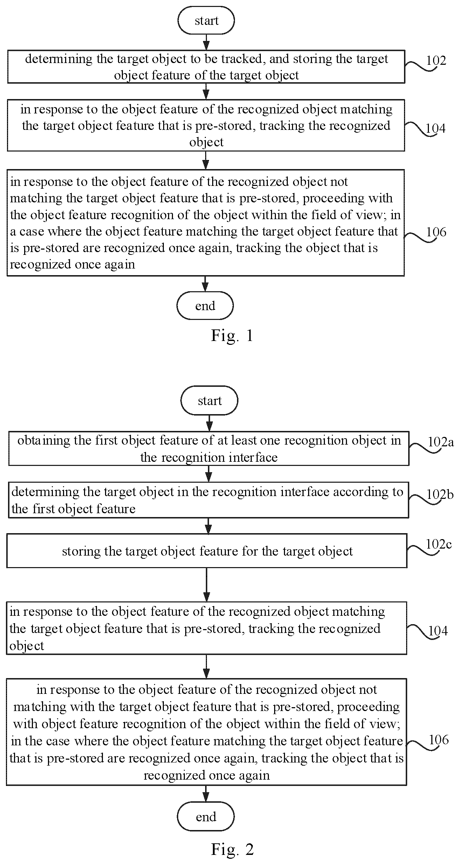

A target tracking method, a target tracking apparatus, a robot and a readable storage medium will be described in detail below with reference to Fig. 1 to Fig. 9 through specific embodiments and application scenarios matching the embodiments.

An execution subject of the technical schemes of the target tracking method provided in the present application may be an intelligent robot or a target tracking apparatus, or may be determined according to actual usage requirements, which are not specifically restricted herein. To more clearly describe the target tracking method provided in the present application, the following description will be provided in a case where the intelligent robot is the execution subject of the target tracking method.

In some embodiments of the present application, the target tracking method may specifically include the following operations at blocks 102-106 as illustrated in Fig. 1.

The operation at block 102: determining a target object to be tracked, and storing a target object feature of the target object.

The operation at block 104: in response to an object feature of a recognized object matching the target object feature that is pre-stored, tracking the recognized object.

The operation at block 106: in response to the object feature of the recognized object not matching the target object feature that is pre-stored, proceeding with an object feature recognition of an object within a field of view; in a case where the object feature matching the target object feature that is pre-stored are recognized once again, tracking the object that is recognized once again.

The target tracking method provided in the present application is used to control an operation of the intelligent robot, thereby enabling the intelligent robot to perform a corresponding tracking and recognition task. The tracking and recognition task may for example be a video call performed by the intelligent robot. In practical application processes, the above-mentioned intelligent robot may specifically be an intelligent robot equipped with a recognition function, such as a robot cleaner, a lobby robot, a companion robot for children, an airport intelligent robot, an intelligent question-and-answer robot, and a home service robot etc., which are not specifically restricted herein.

Specifically, in the target tracking method provided in the present application, the above-mentioned intelligent robot is equipped with a target recognition function and with a target tracking function. After the target tracking function of the intelligent robot is activated, the intelligent robot may analyze and recognize various objects that appear within the field of view of the intelligent robot, determine the target object to be tracked, and store the target object feature of this target object into a buffer zone. On this basis, the intelligent robot performs tracking and recognition of the target objects in the target scenario. Specifically, the intelligent robot performs analysis and recognition of the various objects in the target scenario, to extract the object features of the various objects in the target scenario. The intelligent robot matches and compares the extracted object feature of each object with the target object feature that is pre-stored in the buffer zone. On this basis, in a case where the object feature of a certain object extracted by the intelligent robot is not consistent with the target object feature stored in the buffer zone, i.e., the matching is unsuccessful, it is indicated that the object currently recognized by the intelligent robot is not the target object to be tracked. At this point, the intelligent robot will proceed with analysis and recognition of the extracted object features of the various objects, until the object feature extracted by the intelligent robot for a certain object is consistent with the target object feature stored in the buffer zone, i.e., the matching is successful. It is indicated that the object currently recognized by the intelligent robot is right the above-mentioned target object. At this point, the intelligent robot will track this recognized object in the target scenario, ensuring that this object always remains within the field of view of the intelligent robot.

Furthermore, during a process of tracking the target object by the intelligent robot, the intelligent robot always performs recognition and analysis of the object features of the various objects within its field of view. On this basis, in a case where none of the object features of the various objects recognized by the intelligent robot is consistent with the target object feature stored in the buffer zone, it is indicated that, the intelligent robot has lost track of the target object. For example, in a case where the target object is obscured by other objects or where the target object moves out of the target scenario, the intelligent robot is unable to recognize the target object within its field of view. At this point, the intelligent robot will proceed with performing the object feature recognition process of all of the various objects that appear within its field of view based on the above-mentioned target object feature. In a case where the intelligent robot recognizes the object feature matching the above-mentioned target object feature once again, it is indicated that, the intelligent robot has successfully reacquired or re-found the previously lost tracking target (i.e., the target object). The intelligent robot will track the re-found target object once again, to perform or resume an operation, such as the video call.

In this way, by tracking the target object based on the target object feature of the target object to be tracked, an interference from other objects during a tracking process may be avoided, thereby enabling the robot's interference-resistance tracking function of the intelligent robot, and reducing a false recognition rate during the tracking process. Further, in a case where the object being followed is lost, by an approach of matching the recognized object feature with the cached target object feature, the target object to be tracked is re-found for recognition. In this way, a precise re-finding function of a target tracking object is realized, thereby meeting the usage requirements of the user.

The above-mentioned target scenario may specifically refer to an operation region set for the intelligent robot by the user. During an actual application process, the user may set the above-mentioned target scenario to be the various rooms of the house. In some embodiments, the user may set the above-mentioned target scenario to include only a living room region. which is not specifically restricted herein.

Furthermore, during the actual application process, the above-mentioned target object may specifically refer to a recognition object configured to wake up the intelligent robot or activate the robot. The above-mentioned target object may specifically further refer to a recognition object located in a specific region of a recognition interface. For example, the above-mentioned target object may specifically refer to the recognition object located at an edge region or a center region of the recognition interface of the intelligent robot. The above-mentioned target object may specifically further refer to a recognition object with a specific attribute. For example, the above-mentioned target object may specifically refer to the recognition object such as a child, an elderly person, or the like that appears within a field of recognition view of the intelligent robot. The above-mentioned target object may specifically further refer to the target tracking object preset by the user. For example, the above-mentioned target object may specifically refer to a certain family member set by the user. The above-mentioned target object may specifically further refer to the recognition object with the largest facial area in the recognition interface. The above-mentioned target object may specifically further refer to the recognition object with the smallest depth value in the recognition interface. The recognition object whose depth value is the smallest is closest to a camera apparatus of the intelligent robot. The criteria for selecting the above-mentioned target object may be set by those skilled in the art according to an actual situation, which is not specifically restricted herein.

In some embodiments of the present application, the above-mentioned operation at the block 102 may specifically include the following operations at blocks 102a-102c as illustrated in Fig. 2.

The operation at block 102a: obtaining a first object feature of at least one recognition object in the recognition interface.

The operation at block 102b: determining the target object in the recognition interface according to the first object feature.

The operation at block 102c: storing the target object feature for the target object.

In the above embodiments, the above-mentioned intelligent robot is equipped with the target recognition function. During a recognition process performed by the above-mentioned intelligent robot, the intelligent robot may perform recognition and analysis of various recognition objects that enter its field of recognition view, so as to obtain the first object features of the various recognition objects within the field of recognition view. On this basis, the intelligent robot may further determine, based on the first object features of various recognized recognition objects, the target object to be tracked from the at least one recognition object within the recognition interface. In this way, the intelligent robot may determine the target object to be tracked based on the first object features of the various recognized recognition objects, so as to guarantee an accuracy of the determining of the target object. This further guarantees the accuracy of the process in which the intelligent robot tracks the target object and performs the recognition, thereby meeting the usage requirements of the user.

Specifically, the intelligent robot performs comparation between the first object features of the various recognized recognition objects and a preset object feature set by the user. The intelligent robot determines, based on a comparation result, the target object to be tracked from the at least one recognition object within the recognition interface. Specifically, in a case where the first object feature of a certain recognition object recognized by the intelligent robot is consistent with the preset object feature, the intelligent robot determines this recognition object as the target object to be tracked. For example, the intelligent robot may determine the recognition object located in a center position of the recognition interface as the target object to be tracked. In some embodiments, the intelligent robot may determine the recognition object that matches a child attribute feature within the recognition interface as the target object to be tracked.

During the actual application process, the above-mentioned first object feature may specifically include the object features of the various recognition objects such as location features, attribute features, biological features, or the like. The attribute features may further include facial attribute features, voice attribute features, age attribute features and gender attribute features, or the like. The intelligent robot determines the first object features, such as the location features, the attribute features, the biological features, or the like of the various recognition objects by performing the recognition and analysis of the various recognition objects within the field of recognition view of the intelligent robot. During the actual application process, those skilled in the art may set specific contents of the above-mentioned first object features according to actual situations, which is not specifically restricted herein.

Further, the above-mentioned preset object features are associated with the target object. During the actual application process, the above-mentioned preset object features may specifically include a certain specific object feature preset by the user, such as the child attribute features, the elderly person attribute features, or the like, set by the user. The above-mentioned preset object features may specifically further refer to the object feature of a prioritized tracking object selected by the user in advance, such as facial features of a family member "son" of a family selected by the user in advance, or the like. Those of ordinary skills in the art may set the specific contents of the above-mentioned preset object features according to actual situations, which is not specifically restricted herein.

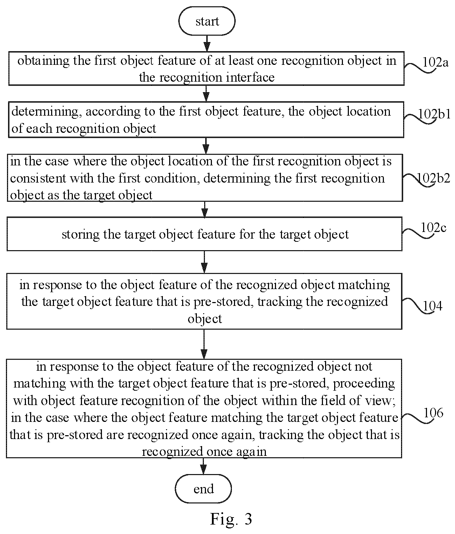

In some embodiments of the present application, the above-mentioned operation at block 102b may specifically the following operations at blocks 102b1 and 102b2 as illustrated in Fig. 3.

The operation at block 102b1: determining, according to the first object feature, an object location of each recognition object.

The operation at block 102b2: in a case where the object location of a first recognition object is consistent with a first condition, determining the first recognition object as the target object.

In the above embodiments, after the intelligent robot performs the recognition and analysis of the various recognition objects within the field of recognition view of the intelligent robot to obtain the first object features of the various recognition objects within the field of recognition view, the intelligent robot determines the object locations of the various recognition objects within its recognition interface based on the first object features of the various recognition objects. On this basis, the intelligent robot performs the analysis and processing of the determined object locations of the various recognition objects. In a case where the intelligent robot judges that the object location of the first recognition object within its recognition interface matches with a set first condition, the intelligent robot will determine the first recognition object as the target object to be tracked. The above-mentioned first recognition object may be any recognition object within the recognition interface of the intelligent robot. In this way, the intelligent robot determines, based on the object locations of the various recognition objects within its recognition interface, the target object within its field of recognition view, thereby guaranteeing the accuracy of the target object determination by the intelligent robot. This further guarantees the accuracy of the process in which the intelligent robot tracks the target object and performs the recognition, thereby meeting the usage requirements of the user.

During the actual application process, the above-mentioned first condition may specifically refer to the object location of the recognition object being located within the center region of the recognition interface of the intelligent robot. The above-mentioned first condition may specifically further refer to the object location of the recognition object being located within the edge region of the recognition interface of the intelligent robot. The above-mentioned first condition may specifically further refer to that, a distance between the recognition object and the camera apparatus of the intelligent robot is the smallest one among the recognition objects. The above-mentioned first condition may specifically further refer to that, the distance between the recognition object and the camera apparatus of the intelligent robot is the greatest one among the recognition objects. During the actual application process, those of ordinary skills in the art may specifically set the specific contents of the above-mentioned first condition according to actual situations, which is not specifically restricted herein.

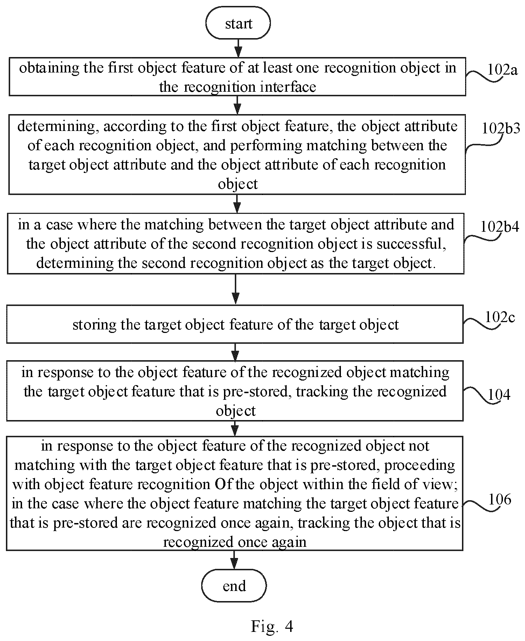

In some embodiments of the present application, the above-mentioned operation at block 102b may specifically include the following operations at blocks 102b3 and 102b4 as illustrated in Fig. 4.

The operation at block 102b3: determining, according to the first object feature, the object attribute of each recognition object, and performing matching between the target object attribute and the object attribute of each recognition object.

The operation at block 102b4: in a case where the matching between the target object attribute and the object attribute of a second recognition object is successful, determining the second recognition object as the target object.

In the above embodiments, after the intelligent robot performs the recognition and analysis of the various recognition objects within the field of recognition view of the intelligent robot to obtain the first object features of the various recognition objects within the field of recognition view, the intelligent robot determines the object attributes of the various recognition objects according to the first object features of the various recognition objects. On this basis, the intelligent robot performs comparation and matching between the object attributes of the various determined recognition objects and the set target object attribute. In a case where the intelligent robot judges that the object attribute of the second recognition object within its recognition interface matches with the above-mentioned target object attribute, the intelligent robot considers that, the matching between the above-mentioned target object attribute and the object attribute of the first recognition object is successful, and determines the above-mentioned second recognition object as the above-mentioned target object. The above-mentioned second recognition object may be any recognition object within the recognition interface of the intelligent robot. In this way, the intelligent robot determines, according to the object attributes of the various recognition objects within its recognition interface, the target object within its field of recognition view, thereby guaranteeing the accuracy of the target object determination by the intelligent robot. This further guarantees the accuracy of the process in which the intelligent robot tracks the target object and performs the recognition, thereby meeting the usage requirements of the user.

During the actual application process, the above-mentioned object attributes may specifically include facial attributes, gender attributes, voice attributes, age attributes, or the like. The intelligent robot may specifically perform analysis and processing of the attribute features of the recognition object, to check whether the target object that is particularly concerned with by the user appears within its field of recognition view. The attribute features are such as the attribute features in the aspects of ages, voices, faces, gender, or the like. During the actual application process, those of ordinary skills in the art may specifically set specific inclusion contents of the above-mentioned object attributes according to actual situations, which is not specifically restricted herein.

Further, the above-mentioned target object attribute corresponds to or is configured to match with the target object. During the actual application process, the above-mentioned target object attribute may specifically include a certain specific object attribute preset by the user, such as the child attribute feature, the elderly person attribute, or the like. The above-mentioned target object attribute may specifically further refer to the object attribute of the target tracking object selected by the user in advance, such as the facial attributes of a family member "grandma" of the family selected by the user in advance, or the like. Those of ordinary skills in the art may set the specific contents of the above-mentioned target object attribute according to actual situations, which is not specifically restricted herein.

In addition, when the intelligent robot determines the object attributes of the various recognition objects within its recognition interface, the intelligent robot may specifically adopt classification models such as the MobileNet classification model, the ShuffleNet classification model, or the like. During the actual application process, those of ordinary skills in the art may specifically select the specific approach by which the intelligent robot checks the object attribute according to actual situations, which is not specifically restricted herein.

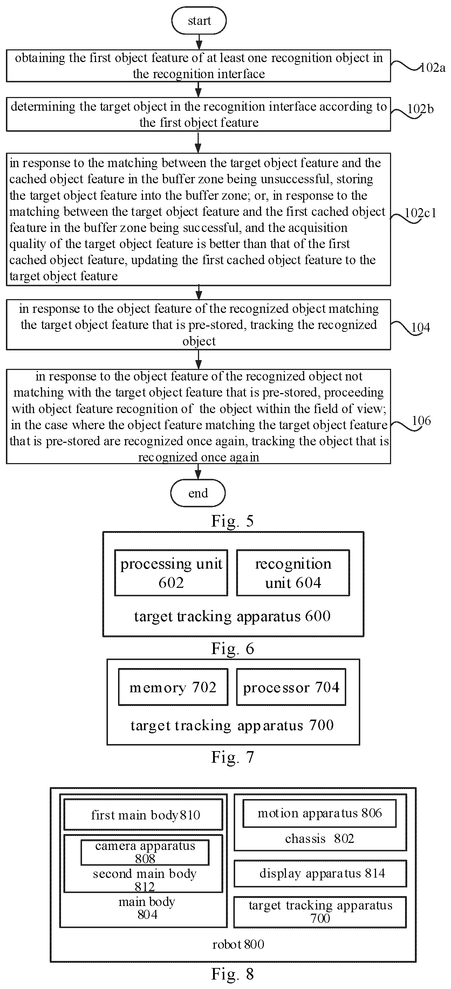

In some embodiments of the present application, the above-mentioned operation at the block 102c may specifically include the following operations at block 102c1 as illustrated in Fig. 5.

The operation at block 102c1: in response to the matching between the target object feature and a cached object feature in the buffer zone being unsuccessful, storing the target object feature into the buffer zone; or, in response to the matching between the target object feature and a first cached object feature in the buffer zone being successful, and acquisition quality of the target object feature is better than that of the first cached object feature, updating the first cached object feature to the target object feature.

In the above embodiments, after the intelligent robot has determined the above-mentioned target object, the intelligent robot will further perform extraction and caching of the target object feature of this target object. Specifically, after extracting the target object feature of the target object, the intelligent robot will perform comparation and matching between this target object feature and the cached object features in the buffer zone. In a case where the matching between each object feature cached in the buffer zone and the above-mentioned target object feature is unsuccessful, it is indicated that, the target object feature does not present in the buffer zone. At this point, the intelligent robot will cache the extracted target object feature into the buffer zone. In a case where the matching between the first cached object features present in the buffer zone and the above-mentioned target object feature is successful, it is indicated that, the target object feature of the target object has been cached in the buffer zone. At this point, the intelligent robot will perform comparation between the acquisition quality of the cached target object feature (i.e., the above-mentioned first cached object feature) and the acquisition quality of the newly extracted target object feature. The acquisition quality comparation may be such as an image quality comparison, a voice clarity comparison, or the like. In a case where the acquisition quality of the newly extracted target object feature is superior to or better than that of the cached first cached object feature, the intelligent robot will replace the cached first cached object feature with the newly extracted target object feature, thereby updating the cached object feature in the buffer zone.

In this way, by caching the extracted target object feature of the target object or by updating the cached object feature in the buffer zone based on the extracted target object feature of the target object, subsequent interference-resistant tracking and precise re-finding of the target object based on the cached target object feature are facilitated. In this way, the accuracy of the target tracking performed by the intelligent robot is enhanced, thereby meeting the requirements of the user.

In some embodiments of the present application, the above-mentioned operation at the block 104 may specifically include the following operations 104a-104c as illustrated in Fig. 2.

The operation 104a: performing object recognition in the target scenario based on the target object feature.

The operation 104b: in response to the target object being recognized in the target scenario, determining a target location of the target object in the target scenario.

The operation 104c: tracking, based on the target location, the target object in the target scenario.

In the above embodiments, after the intelligent robot determines the target object to be tracked and caches the target object feature of this target object, the intelligent robot performs object recognition and tracking in the target scenario based on the target object feature. Specifically, the intelligent robot performs analysis and recognition of the various objects in the target scenario, to extract the object features of the various objects in the target scenario. The intelligent robot matches and compares the extracted object feature of each object with the target object feature stored in the buffer zone. In a case where the extracted object feature of a certain object is consistent with the target object feature stored in the buffer zone, i.e., the matching is successful, it is indicated that, the object currently recognized by the intelligent robot is right the above-mentioned target object. At this point, the intelligent robot may determine the target location of the target object in the target scenario through the object feature of a recognized target object. The intelligent robot further performs tracking of the recognized target object in the target scenario based on the target location, so as to always keep the target object to be within its field of view. In this way, the intelligent robot tracks the target object based on the target object feature of the target object to be tracked, interferences from other objects during the tracking process may be avoided, thereby enabling the interference-resistance tracking function of the intelligent robot, and reducing the false recognition rate during the tracking process, thereby guaranteeing the accuracy of the tracking process of the target object.

In some embodiments of the present application, after the in response to the target object being recognized in the target scenario, the target tracking method may specifically further include the following operations 104d and 104e.

The operation 104d: in response to the target object moving out of the target scenario, proceeding with the object recognition in the target scenario based on the target object feature.

The operation 104e: in response to the target object being recognized once again in the target scenario, proceeding with tracking the target object in the target scenario.

In the above embodiments, during the process of tracking the target object by the intelligent robot, the intelligent robot always performs recognition and analysis of the object features of the various objects within its field of view. On this basis, in a case where the intelligent robot loses track of the target object, such as in a case where the intelligent robot recognizes that the target object has moved out of the target scenario, or where the target object is obscured by another object, the robot will be unable to recognize the target object within its field of view. In other words, none of the object features of the various objects recognized by the intelligent robot is consistent with the target object feature stored in the buffer zone. At this point, the intelligent robot will proceed with object feature recognition of the various objects appearing within its field of view in the target scenario based on the above-mentioned target object feature. In a case where the intelligent robot recognizes the object feature matching the above-mentioned target object feature in the target scenario once again, that is, in the case where the intelligent robot recognizes the above-mentioned target object in the target scenario once again, the intelligent robot will judge that the lost tracking target, i.e., the target object, has been successfully re-found or reacquired. The intelligent robot will then proceed with tracking the re-found target object in the target scenario. In this way, in a case where the object being followed is lost, the intelligent robot re-finds, by an approach of matching the recognized object feature with the cached target object feature, the target object to be tracked for tracking and recognition. In this way, a precise re-finding function of the target tracking object is realized, thereby meeting the usage requirements of the user.

In some embodiments of the present application, the above-mentioned operation of tracking the target object in the target scenario may specifically include the following operations 104c1 and 104c2.

The operation 104c1: in response to a target facial feature of the target object being recognized, determining a face location information of the target facial feature in the recognition interface.

The operation 104c2: adjusting a recognition angle according to the face location information, to enable the target facial feature to be located in a target region of the recognition interface.

In the above embodiments, during the process of tracking the above-mentioned target object in the target scenario by the intelligent robot, the intelligent robot performs target recognition on its recognition interface. In a case where the intelligent robot recognizes the target facial features of the above-mentioned target object in its recognition interface, the intelligent robot determines location information of the recognized target facial features. In other words, the face location information of the above-mentioned target facial features in its recognition interface of the intelligent robot is determined. On this basis, the intelligent robot adjusts its recognition angle according to a location-changing situation of the above-mentioned target facial features in the recognition interface, i.e., according to the changing situation of the above-mentioned face location information, to ensure that the target facial features always remain within the field of recognition view. In this way, when the target facial features of the above-mentioned target object present within the field of recognition view of the intelligent robot, the intelligent robot follows this target facial feature and performs recognition by adjusting its recognition angle, allowing the user to obtain a dynamic state of this target object, thereby meeting the usage requirements of the user.

During the actual application process, the above-mentioned intelligent robot may specifically include a chassis and a main body portion. The chassis is provided with a motion apparatus. The motion apparatus may drive the chassis and the main body portion to move or rotate together. The main body portion includes a first main body and a second main body. The second main body may specifically be a head of the robot. The second main body is provided with the camera apparatus. The second main body may perform rotational movement or pitching movement independently relative to the first main body. On this basis, during the process of the intelligent robot adjusting its recognition angle according to the changing situation of the target facial feature in the recognition interface, the intelligent robot may specifically drive the entire intelligent robot to rotate solely through the motion apparatus provided on the chassis, thereby adjusting the recognition angle of the camera apparatus on the intelligent robot. The intelligent robot may specifically further solely drive the camera apparatus to perform rotational movement or pitching movement through the second main body, such as through the head of the robot, thereby adjusting the recognition angle of the camera apparatus. The intelligent robot may further adjust the recognition angle of the camera apparatus through a coordinated rotation of the second main body and the motion apparatus on the chassis. Specifically, in a case where a location-changing extent of the target facial feature is relatively great, the intelligent robot may drive its entirety to rotate through the motion apparatus on the chassis to adjust the recognition angle. While in a case where the location-changing extent of the target facial feature is relatively slight, the intelligent robot may drive the camera apparatus to perform the rotational movement or the pitching movement through the second main body, so as to adjust the recognition angle.

During the actual application process, those of ordinary skills in the art may specifically set a specific approach by which the intelligent robot adjusts its recognition angle according to actual situations, which is not specifically restricted herein.

In addition, the above-mentioned target object feature may specifically include a torso feature, a voice feature, or the like of the target object. The voice feature is such as a voiceprint feature. On this basis, during the process in which the intelligent robot tracks the above-mentioned target object and performs recognition in the target scenario, the intelligent robot performs target recognition on its recognition interface. In a case where the intelligent robot does not recognize the target facial feature of the above-mentioned target object within its recognition interface, and the intelligent robot does not detect that the target object has exited the target scenario, for example in a case where the target facial feature of the target object is obscured by another recognition object, the intelligent robot may determine the location information of the target object according to the cached voice feature and/or the cached torso feature of the target object. In other words, a first location information of the target object in the recognition interface of the intelligent robot is determined. On this basis, the intelligent robot performs tracking and recognition of the target object by adjusting the recognition angle of the camera apparatus on the intelligent robot according to the location-changing situation of the target object in the recognition interface, i.e., according to the changing situation of the above-mentioned first location information.

Further, in a case where the intelligent robot detects that the target object exits the target scenario, the intelligent robot may proceed with recognition and detection on the various recognition objects in its recognition interface based on the cached target object feature. In a case where the intelligent robot detects the above-mentioned target object feature in its recognition interface once again, that is, in a case where the intelligent robot recognizes that the above-mentioned target object enters into its field of recognition view once again, the intelligent robot may proceed with tracking this target object for recognition.

In some embodiments of the present application, the above-mentioned target tracking method may specifically further include the following operation 108.

The operation 108: in a case of tracking the target object, in response to the object attribute of a recognized first object meeting a target condition, tracking the first object in the target scenario.

In the above embodiments, in the case of tracking the target object by the intelligent robot, the intelligent robot always performs target recognition of the various recognition objects within its recognition interface, so as to determine the object attributes of the various recognition objects, and checking, according to the object attributes of the various recognition objects, whether the recognition object that is particularly concerned with by the user exists in the recognition interface. Specifically, in a case where the object attribute of the first object recognized by the intelligent robot meets the target condition, the intelligent robot may determine the first object as the recognition object that is particularly concerned with by the user. In addition, the tracking object of the intelligent robot is switched from the above-mentioned target object to the first object. In other words, the intelligent robot tracks this first object in the target scenario. While in a case where the object attribute of each recognition object recognized by the intelligent robot does not meet the target condition, the intelligent robot judges that the recognition object that is particularly concerned with by the user does not exist in the recognition interface. The intelligent robot will proceed with tracking the above-mentioned target object. In other words, in the method provided in the present application, in a case where a recognition task (such as a video call) is performed by the above-mentioned intelligent robot, the intelligent robot may prioritize tracking the first object whose object attribute meets the target condition. In a case where the above-mentioned first object does not exist within the field of recognition view of the intelligent robot, the intelligent robot will then track the target object within its field of recognition view. In this way, in a case where the recognition task (such as the video call) is performed by the above-mentioned intelligent robot, the intelligent robot may prioritize tracking the object that is particularly concerned with by the user or the object of interest and perform recognition, thereby facilitating the user to preferentially obtain the dynamic state of the object that is particularly concerned with by him/her or the object of interest. The usage requirements of the user are thus met.

The above-mentioned object attributes may include, but be not limited to the following attributes: location attributes, the facial attributes, the voice attributes, the gender attributes, the age attributes, or the like. The above-mentioned target condition may specifically be: the object attribute of the first object matches with a target attribute. The above-mentioned target attribute may specifically refer to the object attribute of a certain special object (such as a certain family member) set by the user. The above-mentioned target attribute may specifically further refer to a particular object attribute set by the user, such as "the child attribute", "the elderly person attribute", or the like. For example, in a case where the object attribute recognized by the intelligent robot in its recognition interface meets the first object of "the elderly person attribute", the intelligent device switches to track this first object.

In some embodiments of the present application, the above-mentioned operation of in response to the object attribute of the recognized first object meeting the target condition, tracking the first object in the target scenario may specifically include the following operations 108a and 108b.

The operation 108a: in a case where the number of the first objects whose object attributes meet the target condition is greater than 1, determining object information of each of the first objects according to the object feature of each first object.

The operation 108b: tracking the first object whose object information meets a second condition.

In the above embodiments, in a case where the intelligent robot judges that there are at least 2 first objects in its recognition interface whose object attributes match with the above-mentioned target attribute, based on the matching result of the object attributes of the various recognition objects in the recognition interface of the intelligent robot with the above-mentioned target attribute, the intelligent robot proceeds with determining, according to the object feature of each first object, the object information of the various first objects. The intelligent robot further selects a certain first object, according to the object information of the various first objects and from the determined at least 2 first objects, as the tracking object to perform tracking and recognition.

Specifically, the intelligent robot performs analysis and processing of the object information of the determined various first objects. In a case where the intelligent robot judges that, the object information of a certain first object matches with the set second condition, the intelligent robot determines this first object as a prioritized recognition object for tracking. In this way, in a case where the intelligent robot determines, according to the object attributes of the various recognition objects in its recognition interface, at least two recognition objects meet a prioritized tracking condition, the intelligent robot proceeds with analysis of the object information of the at least two determined recognition objects, so as to select an optimal prioritized object for tracking, the accuracy of the determination of the prioritized object for tracking (i.e., the object that is particularly concerned with by the user) by the intelligent robot may be ensured, thereby meeting the usage requirements of the user.

During the actual application process, the above-mentioned object information may specifically include the location information, facial area information, attribute information, or the like. Those of ordinary skills in the art may set the specific contents of the above-mentioned object information according to actual situations, which is not specifically restricted herein. In other words, in a case where the intelligent robot determines, according to the object attributes of the various recognition objects in its recognition interface, at least two recognition objects meet the prioritized condition for tracking, the intelligent robot proceeds with filtering or screening the determined at least two recognition objects based on aspects such as locations of the objects, the facial features of the objects, the object attributes, or the like, so as to select an optimal prioritized object for tracking from the determined at least two recognition objects.

On this basis, during the actual application process, the above-mentioned second condition may specifically refer to the object location of the first object being located in the center region of the recognition interface of the intelligent robot. The above-mentioned second condition may specifically further refer to the object location of the first object being located in the edge region of the recognition interface of the intelligent robot. The above-mentioned second condition may specifically further refer to that, the distance between the first object and the camera apparatus of the intelligent robot is the smallest among the objects. The above-mentioned second condition may specifically further refer to that, the distance between the first object and the camera apparatus of the intelligent robot is the greatest among the objects. The above-mentioned second condition may specifically further refer to a facial area of the first object is the greatest among the objects. The above-mentioned second condition may specifically further refer to the age of the first object is the smallest among the objects. During the actual application process, those of ordinary skills in the art may specifically set the specific contents of the above-mentioned second condition according to actual situations, which is not specifically restricted herein.

As an example, in a case where the above-mentioned target attribute is the child attribute, the intelligent robot analyzes and processes the object attributes of the various recognition objects in its recognition interface, and determines that a plurality of children are present in its recognition interface. In other words, the intelligent robot determines that a plurality of first objects meeting the child attribute are present in its recognition interface. On this basis, the intelligent robot analyzes the age attributes of the determined plurality of first objects, and determines the one with the youngest age among the plurality of first objects as the prioritized recognition object for tracking.

In some embodiments of the present application, after the operation of tracking the first object in the target scenario, the above-mentioned target tracking method may specifically further include the following operations 110 or 112.

The operation 110: in response to the first object moving out of the target scenario, performing, based on the object feature of the first object, object recognition in the target scenario; in response to the first object being recognized once again in the target scenario, proceeding with tracking the first object in the target scenario.

The operation 112: in response to the first object moving out of the target scenario, tracking the target object in the target scenario.

In the above embodiments, during the process of tracking the first object by the intelligent robot, the intelligent robot may further cache the object feature of the first object. On this basis, during the process of the intelligent robot tracking the above-mentioned first object and performing recognition in the target scenario, in a case where the intelligent robot loses track of the first object, such as in a case where the intelligent robot detects that the first object exits the target scenario, or in a case where the first object is obscured by another object, the intelligent robot will proceed with performing object feature recognition of the various objects appearing within its field of view in the target scenario based on the cached object feature of the first object. In a case where the intelligent robot recognizes the object feature matching the cached object feature of the first object in the target scenario once again, that is, in the case where the intelligent robot recognizes the above-mentioned first object in the target scenario once again, the intelligent robot will judge that the lost tracking target, i.e., the first object, has been successfully re-found. The intelligent robot will then proceed with tracking the re-found first object in the target scenario. In this way, in a case where the intelligent robot has lost track of the first object, the intelligent robot may re-find the first object based on the cached object feature of the first object. Since the object features of other recognition objects in the recognition object cannot match the cached object feature of the first object, the intelligent robot will not perform matching of other recognition objects within the field of recognition view for tracking. In this way, the interference-resistance tracking function and the precise re-finding function of the first object of the intelligent robot are realized, thereby meeting the usage requirements of the user.

In some embodiments, during the process in which the intelligent robot tracks the above-mentioned first object and performing recognition in the target scenario, in a case where the intelligent robot loses track of the first object, the intelligent robot switches to track the above-mentioned target object. In some embodiments, the intelligent robot determines, based on the object attributes of the various recognition objects in its recognition interface, a new prioritized object (i.e., the second object) for tracking. At the same time, during the process of tracking the target object or the second object by the intelligent robot, the intelligent robot may perform, based on the cached object feature of the first object, recognition of the various recognition objects in its recognition interface. In a case where the above-mentioned first object is recognized once again, the intelligent robot may resume prioritizing tracking of this first object again. In this way, in a case where the object that is particularly concerned with by the user (i.e., the first object) is recognized, the intelligent robot will prioritize tracking this first object. While in a case where the intelligent robot loses track of the first object, the intelligent robot may switch to track the above-mentioned target object or other objects that are concerned with by the user. In this way, the user is facilitated to preferentially obtain the dynamic state of the object that is particularly concerned with by him/her or the object of interest, and the usage requirements of the user are met.

As an example, in a case where there is a child among the family members, when the user makes a remote video call with his/her family member through the intelligent robot, the child may typically enter and/or exit the field of recognition view of the intelligent robot from time to time. At this point, the user may set the "child" as a primary tracking object of the intelligent robot. Once the "child" enters the field of recognition view of the intelligent robot, the intelligent robot will automatically track this "child" for performing the video call. While the "child" exits the field of recognition view of the intelligent robot, the intelligent robot will resume tracking the originally or previously tracked family member for performing the video call.

In some embodiments of the present application, the above-mentioned target tracking method may specifically further include the following operations 120 and 122.

The operation 120: performing a determination of identity information of the target object according to the target object feature.

The operation 122: performing an interaction task associated with the identity information for the target object.

In the above embodiments, during the process in which the intelligent robot tracks the above-mentioned target object and performs recognition in the target scenario, the intelligent robot may further determine, based on the target object feature of this target object, the identity information of this target object. On this basis, the intelligent robot may search, according to the determined identity information of the target object, that whether any interaction task associated with this identity information exists in a storage zone of the intelligent robot. In a case where the associated interaction task exists in the storage zone, the intelligent robot performs the above-mentioned interaction task on the target object. In this way, during the tracking and recognition process performed by the above-mentioned intelligent robot, a corresponding interaction task may be performed for the tracking object according to the identity information of the tracking object, thereby enriching interaction capabilities of the intelligent robot, thereby meeting the usage requirements of the user.

As an example, during a process in which the intelligent robot tracks the family member A for recognition, the intelligent robot recognizes that the identity information of this family member A is the family member "father". On this basis, the intelligent robot searches or retrieves a voice message associated with the family member "father" from its storage zone, and plays this voice message to the family member "father".

As an example, during a process in which the intelligent robot tracks the family member B for recognition, the intelligent robot recognizes that the identity information of this family member B is the family member "mother". On this basis, the intelligent robot searches or retrieves a schedule reminder associated with the family member "mother" from its storage zone, and reminds the family member "mother" to handle the corresponding task either by playing voice or displaying information.

In summary, through the target tracking method provided in some embodiments of the present application, the following functions 1-3 of the intelligent robot are achieved. 1. The human face tracking function for specific attributes: For example, during a process of human face tracking, the robot may perform child attribute recognition. If the robot recognizes that a child enters its field of recognition view, the robot will prioritize tracking the child's face for recognition. 2. The interference-resistance tracking function: during a process in which the robot automatically tracks the target human face and performs recognition, the robot temporarily extracts and caches the human face features of the target human face. In a case where the process in which the robot tracks the target human face and perform recognition is interrupted (such as when the target human face is obscured or lost), if the target human face enters the field of recognition view of the robot again, the robot will accurately and stably retrieve or re-find the target human face according to the cached human face feature, and proceed with tracking and recognition. 3. An autonomous recognition broadcast/interaction function: During a process in which the robot automatically tracks the target human face and perform recognition, the robot may recognize the identity information matching the target human face, and may perform, according to the identity information, interaction operations on the target human face. The interaction operations are for example providing schedule reminders, playing recorded voice messages, or setting alarms, or the like.

According to an embodiment of the present application, a target tracking apparatus is further proposed. As illustrated in Fig. 6, Fig. 6 is a structural block diagram of an embodiment of a target tracking apparatus 600 according to the present application. This target tracking apparatus 600 may specifically include the following processing unit 602 and the recognition unit 604.

The processing unit 602 is configured to determine the target object to be tracked, and storing the target object feature of the target object.

The recognition unit 604 is configured to, in response to the object feature of the recognized object matching the target object feature that is pre-stored, track the recognized object.

The recognition unit 604 is further configured to, in response to the object feature of the recognized object not matching the target object feature that is pre-stored, proceeding with the object feature recognition of an object within the field of view; in a case where the object feature matching the target object feature that is pre-stored are recognized once again, tracking the object that is recognized once again.

The target tracking apparatus 600 provided in the embodiments of the present application is used to control the operation of the intelligent robot, thereby enabling the intelligent robot to perform a corresponding tracking and recognition task. The tracking and recognition task may for example be the video call conducted by the intelligent robot. In practical application processes, the above-mentioned intelligent robot may specifically be the intelligent robot equipped with recognition function, such as the robot cleaner, the lobby robot, the companion robot for children, the airport intelligent robot, the intelligent question-and-answer robots, the home service robot, or the like, which is not specifically restricted herein.

Specifically, the above-mentioned intelligent robot is equipped with the target recognition function and the target tracking function. The target tracking apparatus 600 provided in the present application includes the processing unit 602 and the recognition unit 604. After the target tracking function of the intelligent robot is activated, the processing unit may analyze and recognize the various objects that appear within the field of view of the intelligent robot, determine the target object to be tracked by the intelligent robot, and store the target object feature of this target object into the buffer zone. On this basis, the target tracking apparatus performs tracking and recognition of the target objects in the target scenario through the recognition unit. Specifically, the recognition unit performs analysis and recognition of the various objects in the target scenario, to extract the object features of the various objects in the target scenario. The recognition unit matches and compares the extracted object feature of each object with the target object feature that is pre-stored in the buffer zone. On this basis, in a case where the extracted object feature of a certain object is inconsistent with the target object feature stored in the buffer zone, i.e., the matching is unsuccessful, it is indicated that, the object recognized by the recognition unit is not the target object to be tracked. At this point, the recognition unit will proceed with analysis and recognition of the extracted object features of the various objects, until the extracted object feature of a certain object is consistent with the target object feature stored in the buffer zone, i.e., the matching is successful, the recognition unit judges that, the currently recognized object is right the above-mentioned target object. At this point, the target tracking apparatus will track this recognized object in the target scenario, ensuring that this object always keeps within the field of view of the intelligent robot.

Furthermore, during the process of tracking the target object by the intelligent robot, the recognition unit always performs recognition and analysis of the object features of the various objects within the field of view of the intelligent robot. On this basis, in a case where none of the object features of the various objects recognized by the recognition unit is consistent with the target object feature stored in the buffer zone, it is indicated that, the intelligent robot has lost track of the target object. For example, in a case where the target object is obscured by another object or where the target object moves out of the target scenario, the recognition unit is unable to recognize the target object within the field of view of the intelligent robot. At this point, the recognition unit will proceed with the object feature recognition of all of the various objects that appear within the field of view of the intelligent robot based on the above-mentioned target object feature. In a case where the recognition unit recognizes the object feature matching the above-mentioned target object feature once again, it is indicated that, the intelligent robot has successfully re-found the previously lost tracking object, i.e., the target object. The intelligent robot will track the re-found target object once again, to perform or resume an operation, such as the video call.

In this way, by tracking the target object based on the target object feature of the target object to be tracked, the interferences from other objects during the tracking process may be avoided, thereby enabling the interference-resistance tracking function of the intelligent robot, and reducing the false recognition rate during the tracking process. Further, in a case where the object being followed is lost, by the approach of matching the recognized object feature with the cached target object feature, the target object to be tracked is re-found for recognition. In this way, the precise re-finding function of the target tracking object is realized, thereby meeting the usage requirements of the user.

The above-mentioned target scenario may specifically refer to the operation region of the intelligent robot set by the user. During the actual application process, the user may set the above-mentioned target scenario to be the various rooms of the house. In some embodiments, the user may set the above-mentioned target scenario to include only the living room region, which is not specifically restricted herein.

Further, during the actual application process, the above-mentioned target object may specifically refer to the recognition object configured to wake up the intelligent robot or activate the robot. The above-mentioned target object may specifically further refer to the recognition object located in a specific region of the recognition interface. For example, the above-mentioned target object may specifically refer to the recognition object located at the edge region or the center region of the recognition interface of the intelligent robot. The above-mentioned target object may specifically further refer to the recognition object with a certain specific attribute. For example, the above-mentioned target object may specifically refer to the recognition object appearing within the field of recognition view of the intelligent robot, such as the child, the elderly person, or the like. The above-mentioned target object may specifically further refer to the target tracking object preset by the user. For example, the above-mentioned target object may specifically refer to a specific family member set by the user. The above-mentioned target object may specifically further refer to one of the recognition objects in the recognition interface with the greatest facial area. The above-mentioned target object may specifically further refer to one of the recognition objects in the recognition interface with the smallest depth value. The smallest depth value indicates that the recognition object matching the smallest depth value is closest to the camera apparatus of the intelligent robot among the recognition objects. The criteria for selecting the above-mentioned target object may be set according to the actual situation by those skilled in the art, which is not specifically restricted herein.

In some embodiments of the present application, the processing unit 602 is specifically configured to: obtain the first object feature of the at least one recognition object in the recognition interface; recognize the target object in the recognition interface according to the first object feature. The first object feature includes at least one selected from the group consisting of: the location feature, the attribute feature.

In some embodiments of the present application, the processing unit 602 is specifically configured to: determine, according to the first object feature, the object location of each recognition object; in a case where the object location of the first recognition object is consistent with the first condition, determine the first recognition object as the target object.

In some embodiments of the present application, the processing unit 602 is specifically configured to: determine, according to the first object feature, the object attribute of each recognition object, and perform matching between the target object attribute and the object attribute of each recognition object; in a case where the matching between the target object attribute and the object attribute of the second recognition object is successful, determine the second recognition object as the target object. The object attribute includes at least one selected from the group consisting of: the facial attribute, the voice attribute, the gender attribute, and the age attribute.

In some embodiments of the present application, the processing unit 602 is specifically configured to: in response to the matching between the target object feature and the cached object feature in the buffer zone being unsuccessful, store the target object feature into the buffer zone; or, in response to the matching between the target object feature and the first cached object feature in the buffer zone being successful, and the acquisition quality of the target object feature is better than that of the first cached object feature, update the first cached object feature to the target object feature.

In some embodiments of the present application, the recognition unit 604 is specifically configured to: perform the object recognition in the target scenario based on the target object feature; in response to the target object being recognized in the target scenario, determine the target location of the target object in the target scenario; track, based on the target location, the target object in the target scenario.

In some embodiments of the present application, after the in response to the target object being recognized in the target scenario, the recognition unit 604 is further configured to: in response to the target object moving out of the target scenario, proceeding with object recognition in the target scenario based on the target object feature; in response to the target object being recognized once again in the target scenario, proceeding with tracking the target object in the target scenario.

In some embodiments of the present application, the recognition unit 604 is specifically configured to: in response to the target facial feature of the target object being recognized, determine the face location information of the target facial feature in the recognition interface; adjust the recognition angle according to the face location information, to enable the target facial feature to be located in the target region of the recognition interface.

In some embodiments of the present application, the recognition unit 604 is specifically further configured to: in the case of tracking the target object, in response to the object attribute of the recognized first object meeting the target condition, track the first object in the target scenario.

In some embodiments of the present application, the recognition unit 604 is specifically configured to: in a case where the number of the first objects whose object attributes meet the target condition is greater than 1, determine the object information of each first object based on the object feature of each first object; track the first object whose object information meets the second condition. The object information includes at least one selected from the group consisting of: the location information, the attribute information, and the facial area information.

In some embodiments of the present application, the recognition unit 604 is specifically further configured to: in response to the first object moving out of the target scenario, perform, based on the object feature of the first object, object recognition in the target scenario; in response to the first object being recognized once again in the target scenario, proceed with tracking the first object in the target scenario; or, in response to the first object moving out of the target scenario, track the target object in the target scenario.

In some embodiments of the present application, the processing unit 602 is further configured to: determine the identity information of the target object according to the target object feature; perform the interaction task associated with the identity information of the target object.

According to an embodiment of the present application, another target tracking apparatus is further proposed. As illustrated in Fig. 7, Fig. 7 is a structural block diagram of a second embodiment of a target tracking apparatus 700 according to the present application. The target tracking apparatus 700 includes: a memory 702 and a processor 704.

The memory 702 stores a program and an instruction.

The processor 704 implements, when executing the above-mentioned program or instruction, the operations of the target tracking method in any of the above-mentioned embodiments.

The target tracking apparatus 700 provided in the present embodiment includes the memory 702 and the processor 704. The program or the instruction in the memory 702, when being executed by the processor 704, is configured to implement operations of the target tracking method of any of the above-mentioned embodiments. Therefore, this target tracking apparatus 700 has all the beneficial effects of the target tracking method of any of the above-mentioned embodiments, which will not be elaborated herein.

Specifically, the memory 702 and the processor 704 may be connected through a bus or through other approaches. The processor 704 may include one or more processing units. The processor 704 may be chips such as a central processing unit (CPU), a digital signal processor (DSP), an application specific integrated circuit (ASIC), a field programmable gate array (FPGA), or the like.

According to an embodiment of the present application, a robot is further proposed. As illustrated in Fig. 8, Fig. 8 is a structural block diagram of an embodiment of a robot 800 according to the present application. Specifically, the robot 800 includes the target tracking apparatus 700, a chassis 802 and a main body 804 of the above-mentioned embodiments.

The robot 800 provided according to a fourth aspect of the present application may include the target tracking apparatus 700 of the embodiment of the above-mentioned third aspect. Therefore, this robot 800 has all the technical effects of the target tracking apparatus 700 of the above-mentioned embodiments, which will not be elaborated herein.

Further, the above-mentioned robot 800 further includes the chassis 802 and the main body 804. The chassis 802 is provided with a motion apparatus 806. The motion apparatus 806 may drive the chassis 802 and the main body 804 portion to move or rotate together. The main body 804 is provided with a camera apparatus 808. During the operation process of the robot 800, the target tracking apparatus 700 may control the camera apparatus 808 to perform recognition, and control the motion apparatus 806 to move or rotate according to the picture recognized by the camera apparatus 808. In this way, the recognition angle of the camera apparatus 808 may be adjusted according to the location-changing situation of the tracking object, thereby achieving the tracking and recognition function of the robot 800.

Further, in practical application processes, the above-mentioned robot 800 may including, but not limited to: the robot equipped with the recognition function, such as the robot cleaner, the lobby robot, the companion robot for children, the airport intelligent robot, the intelligent question-and-answer robots, the home service robot, or the like.

In some embodiments of the present application, as illustrated in Fig. 8, the main body 804 portion of the robot 800 includes a first main body 810 and a second main body 812. The second main body 812 may specifically be the head of the robot 800. The second main body 812 is provided with the camera apparatus 808. The second main body 812 may perform the rotational movement or the pitching movement independently relative to the first main body 810. In other words, the second main body 812 may specifically swing along an axial direction of the robot 800. The second main body 812 may specifically rotate around an axis of the robot 800.

On this basis, during the process in which the robot 800 adjusts the recognition angle of the camera apparatus 808 provided on the robot 800 according to the location-changing situation of the tracking object, the robot 800 may specifically drive the entire robot to rotate solely through the motion apparatus 806 on the chassis, thereby adjusting the recognition angle of the camera device 808 on the robot 800. The robot 800 may specifically further solely drive the camera apparatus 808 to perform rotational movement or pitching movement through the second main body 812, such as through the head of the robot 800, thereby adjusting the recognition angle of the camera apparatus 808. The robot 800 may further adjust the recognition angle of the camera apparatus 808 through the coordinated rotation of the second main body 812 and the motion apparatus 806 on the chassis 802. Specifically, in a case where the location-changing extent of the tracking object is relatively great, the robot 800 may drive its entirety to rotate through the motion apparatus 806 on the chassis 802 to adjust the recognition angle. While in a case where the location-changing extent of the tracking object is relatively slight, the robot 800 may drive the camera apparatus 808 to perform the rotational movement or the pitching movement through the second main body 812, so as to adjust the recognition angle.

During the actual application process, those of ordinary skills in the art may specifically set the specific approach by which the robot 800 adjusts the recognition angle of the camera apparatus 808 on the robot 800 according to actual situations, which is not specifically restricted herein.

In some embodiments of the present application, as illustrated in Fig. 8, the above-mentioned robot 800 may further include a display apparatus 814, such as a display screen. During a process in which the robot 800 recognizes the picture through its camera apparatus 808, this display apparatus 814 may display the picture recognized by the camera apparatus 808, thereby allowing the user to look up the recognition picture of the robot 800, and enabling operations such as a video chat, a video conference, or the like.

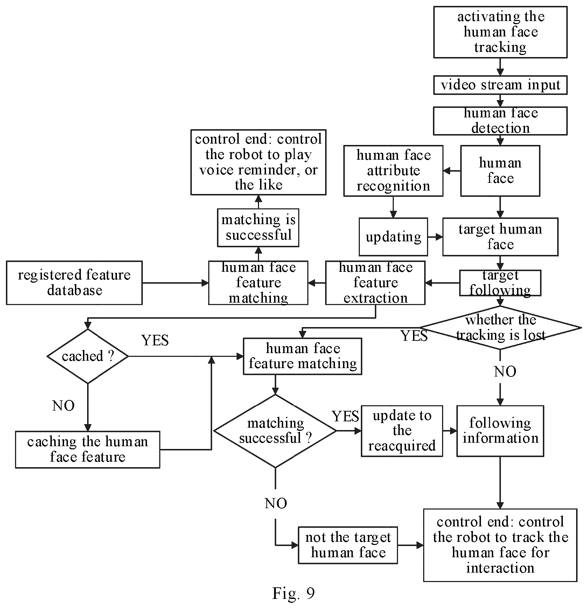

During the actual application process, an operating system of the robot 800 may specifically include a control end and a processing end. During an operating process of the robot 800, as specifically illustrated in Fig. 9, after the human face tracking function is activated by the robot 800, the camera apparatus 808 transmits the recognized video stream data to the processing end of the robot 800. The processing end of the robot 800 may perform human face detection of the input video stream data, so as to determine a human face for interaction or an interaction human face. On this basis, the processing end performs a human face attribute recognition of a human face image extracted from the video stream data. In a case where no specific human face attribute (such as the child attribute) is recognized by the processing end, the processing end determines the above-mentioned interaction human face as the target human face. The control end then controls the robot 800 to perform following and recognition based on the target human face. While in a case where the specific human face attribute is recognized by the processing end, the processing end may update the target human face to the human face with this specific human face attribute. At the same time, the control end controls the robot 800 to perform following and recognition according to the updated target human face. Specifically, the control end specifically determines following information (such as determines adjusting information of a recognition parameter of the camera apparatus) of the target human face according to the location-changing situation of the target human face. The control end then controls the robot 800 to perform following and recognition of the target human face according to the determined following information, and controls the robot 800 to interact with the target human face, such as conducting the video call with the target human face.

At the same time, in a process in which the control end controls the robot 800 to perform tracking and recognition according to the target human face, the processing end may further extract and temporarily cache the target human face feature of the target human face. The processing end may match this target human face feature with the human face feature in a human face registration database. In other words, the processing end determines the identity information matching the target human face. In a case where the target human face feature matches with a certain human face feature in the human face registration database, the control end may control the robot 800 to execute the interaction task associated with this human face feature, such as playing voice reminders, or the like. In addition, during the process in which the control end controls the robot 800 to perform following and recognition, the processing end performs analysis and recognition of the video stream data input into the processing end in real time, so as to extract the human face feature in the video stream data. After the tracking of the target human face is lost, the processing end matches the extracted human face feature with the cached target human face feature. In the case where a certain human face feature matches the target human face feature, the processing end judges that the target human face enters the field of recognition view of the robot 800 once again, the control end controls the robot 800 to proceed with tracking and recognition of this target human face. In the case where none of the extracted various human face features matches the target human face feature, the control end controls the robot 800 to proceed with tracking of the original interaction human face or other non-target human face for recognition.

In this way, through the mutual cooperation between the processing end and the control end, the human face tracking function for specific attributes, the interference-resistance tracking function, or the autonomous recognition broadcast/interaction function of the robot 800 may be achieved.

According to a fifth aspect of the present application, a readable storage medium is provided. The readable storage medium stores the program or the instruction. The program or the instruction is configured to, when being executed by a processor, implement operations of the target tracking method in any of the above-mentioned embodiments.

The program or the instruction stored in the readable storage medium provided in some embodiments of the present application is configured to, when being executed by the processor, implement operations of the target tracking method of any of the above-mentioned embodiments. Therefore, this readable storage medium has all the beneficial effects of the target tracking method of any of the above-mentioned embodiments, which will not be elaborated herein.

Specifically, the above-mentioned readable storage medium may include any medium that is capable of storing or transmitting information. Examples of the readable storage media may include electronic circuits, semiconductor memory devices, the read-only memory (ROM), the random-access memory (RAM), the compact disc read-only memory (CD-ROM), the flash memory, the erasable ROM (EROM), magnetic tapes, floppy disks, optical disks, hard disks, the optical fiber medium, radio frequency (RF) links, optical data storage devices, or the like. Code segments may be downloaded via computer networks such as the Internet, an intranet, or the like.

A computer program product may be provided according to embodiments of a sixth aspect of the present application. The computer program product includes a computer program. This computer program may implement, when being executed by a processor, the target tracking method of any of the above-mentioned technical schemes. Therefore, the computer program product provided according to the sixth aspect of the present application has all the beneficial effects of the target tracking method of any technical scheme according to the above-mentioned first aspect, which will not be elaborated herein.

In actual application processes, the above-mentioned computer program product includes, but is not limited to: the intelligent robot equipped with the recognition function, such as the robot cleaner, the lobby robot, the companion robot for children, the airport intelligent robot, the intelligent question-and-answer robot, the home service robot, or the like, which are not specifically restricted herein.

In the description of the present specification, the terms "first" and "second" are for the purpose of description only, and cannot be construed as indicating or implying relative importance, unless otherwise definitely specified and limited. The terms "connected", "installed", "fixed" and other terms should be understood in a broad sense. For example, "connected" may refer to fixed connections or detachable connections, or integral connections. In some embodiments, "connected" may refer to direct connections, or indirect connections through intermediate mediums. For those of ordinary skills in the art, the specific meanings of the above-mentioned terms in the present application can be understood according to specific circumstances.

In the description of the present specification, the description with reference to the terms "an embodiment", "some embodiments", "specific embodiments" etc., means that, the specific features, structures, materials, or characteristics described in conjunction with the embodiments or examples are included in at least one embodiment or example of the present application. In this specification, schematic expressions of the above-mentioned terms do not necessarily refer to the same embodiment or the same example. Moreover, the specific features, structures, materials or characteristics described may be combined in any of the one or more embodiments or examples in a suitable manner.

Additionally, the technical schemes of various embodiments of the present application may be combined with each other, but such combinations must be based on what can be implemented by a person of ordinary skills in the art. If a combination of technical schemes leads to contradictions or is unimplementable, it should be considered that such a combination does not exist, and is not in the protection scope claimed by the present application.

The above-mentioned descriptions are merely embodiments of the present application, and are not intended to restrict the present application. For those of ordinary skills in the art, the present application may be subject to various modifications and variations. Any modification, equivalent substitution, improvement, or the like, made in the spirit and principles of the present application shall be included in the protection scope of the present application.

## Claims

1. A target tracking method, comprising:
determining a target obj ect to be tracked, and storing a target object feature of the target object;
in response to an object feature of a recognized object matching the target object feature that is pre-stored, tracking the recognized object; and
in response to the obj ect feature of the recognized object not matching the target object feature that is pre-stored, proceeding with object feature recognition of an object within a field of view, and in a case where the object feature matching the target object feature that is pre-stored is recognized once again, tracking the object that is recognized once again.

2. The target tracking method as claimed in claim 1, wherein
said determining the target object to be tracked comprises:
obtaining a first object feature of at least one recognition object in a recognition interface; and
determining, according to the first object feature, the target object in the recognition interface, and
wherein the first object feature comprises at least one of: a location feature and an attribute feature.

3. The target tracking method as claimed in claim 2, wherein said determining, according to the first object feature, the target object in the recognition interface comprises:
determining, according to the first object feature, an object location of each recognition object; and
in response to the object location of a first recognition object of the at least one recognition object meeting a first condition, determining the first recognition object as the target object.

4. The target tracking method as claimed in claim 2, wherein
said determining, according to the first object feature, the target object in the recognition interface comprises:
determining, according to the first object feature, an object attribute of each recognition object;
performing matching between the object attribute of each recognition object and a target object attribute, wherein the target object attribute corresponds to the target object; and
in response to the matching between the object attribute of a second recognition object of the at least one recognition object and the target object attribute being successful, determining the second recognition object as the target object, and
wherein the object attribute comprises at least one selected from the group consisting of: a facial attribute, a voice attribute, a gender attribute, and an age attribute.

5. The target tracking method as claimed in any one of claims 1-4, wherein
said storing the target object feature of the target object comprises:
in response to the matching between the target object feature and a cached object feature in a buffer zone being not successful, storing the target object feature into the buffer zone; or
in response to the matching between the target object feature and a first cached object feature in the buffer zone being successful, and acquisition quality of the target object feature is better than that of the first cached object feature, updating the first cached object feature to the target object feature.

6. The target tracking method as claimed in any one of claims 1-5, wherein
said in response to the object feature of the recognized object matching the target object feature that is pre-stored, tracking the recognized object comprises:
performing, based on the target object feature, object recognition in a target scenario;
in response to the target object being recognized in the target scenario, determining a target location of the target object in the target scenario; and
tracking, based on the target location, the target object in the target scenario.

7. The target tracking method as claimed in claim 6, wherein the target tracking method further comprises after said in response to the target object being recognized in the target scenario,
in response to the target object moving out of the target scenario, proceeding with the object recognition in the target scenario based on the target object feature; and
in response to the target object being recognized once again in the target scenario, proceeding with tracking the target object in the target scenario.

8. The target tracking method as claimed in claim 6 or 7, wherein
said tracking the target object in the target scenario comprises:
in response to a target facial feature of the target object being recognized, determining face location information of the target facial feature in the recognition interface; and
adjusting, according to the face location information, a recognition angle, and enabling the target facial feature to be located in a target region of the recognition interface.

9. The target tracking method as claimed in any one of claims 1-8, further comprising:
in a case of tracking the target object, in response to the object attribute of a recognized first object meeting a target condition, tracking the first object in the target scenario.

10. The target tracking method as claimed in claim 9, wherein
said in response to the object attribute of the recognized first object meeting the target condition, tracking the first object in the target scenario comprises:
in a case where the number of the first object whose object attributes meet the target condition is greater than 1, determining, according to the object feature of each first object, object information of each first object; and
tracking the first object whose object information meets a second condition, and
wherein the object information comprises at least one selected from the group consisting of: location information, attribute information, and facial area information.

11. The target tracking method as claimed in claim 9 or 10, wherein the method further comprises after said tracking the first object in the target scenario,
in response to the first object moving out of the target scenario, performing, based on the object feature of the first object, object recognition in the target scenario, and in response to the first object being recognized once again in the target scenario, proceeding with tracking the first object in the target scenario; or
in response to the first object moving out of the target scenario, tracking the target object in the target scenario.

12. The target tracking method as claimed in any one of claims 1-11, further comprising:
determining, according to the target object feature, an identity information of the target object; and
performing an interaction task associated with the identity information for the target object.

13. A target tracking apparatus, comprising:
a processing unit, configured to determine a target object to be tracked, and store a target object feature of the target object; and
a recognition unit, configured to: in response to an object feature of a recognized object matching the target object feature that is pre-stored, track the recognized object, and
wherein the recognition unit is further configured to: in response to the object feature of the recognized object not matching the target object feature that is pre-stored, proceed with object feature recognition of an object within a field of view; in a case where the object feature matching the target object feature that is pre-stored are recognized once again, track the object that is recognized once again.

14. A target tracking apparatus, comprising:
a memory, storing a program or an instruction; and
a processor, configured to, when executing the program or the instruction, implement operations of the target tracking method as claimed in any one of claims 1 to 12.

15. A robot, comprising:
a chassis, provided with a motion apparatus;
a main body, provided on the chassis, and provided with a camera apparatus; and
the target tracking apparatus as claimed in claim 14,
wherein the target tracking apparatus is configured to control the camera apparatus to perform recognition, and control the motion apparatus to move or rotate to adjust a recognition angle.

16. The robot as claimed in claim 15, wherein
the main body comprises:
a first main body, provided on the chassis; and
a second main body, provided on the first main body, and rotatably connected to the first main body,
wherein the camera apparatus is provided on the second main body, the second main body is capable of swinging along an axis direction of the robot, and the second main body is rotatable around an axis of the robot.

17. The robot as claimed in claim 15 or 16, further comprising:
a display apparatus, configured to display a recognition picture of the camera apparatus.

18. A readable storage medium storing a program or an instruction, wherein
the program or the instruction, when being executed by a processor, is configured to implement operations of the target tracking method as claimed in any one of claims 1-12.

19. A computer program product comprising a computer program, wherein
the computer program, when being executed by a processor, is configured to implement operations of the target tracking method as claimed in any one of claims 1-12.
